Europäisches Patentamt

European Patent Office

Office européen des brevets

(19)

(11) Numéro de publication : **0 389 329 B1**

(12) ## FASCICULE DE BREVET EUROPEEN

(45) Date de publication du fascicule du brevet :
**08.09.93 Bulletin 93/36**

(51) Int. Cl.$^5$ : **B01D 53/34,** C04B 18/06,
C02F 11/00

(21) Numéro de dépôt : **90400642.6**

(22) Date de dépôt : **12.03.90**

(54) **Procédé pour l'insolubilisation et l'agglomération de résidus d'épuration des fumées provenant de l'incinération de déchets.**

(30) Priorité : **20.03.89 FR 8903587**

(43) Date de publication de la demande :
**26.09.90 Bulletin 90/39**

(45) Mention de la délivrance du brevet :
**08.09.93 Bulletin 93/36**

(84) Etats contractants désignés :
**BE CH DE DK ES GB GR IT LI LU NL SE**

(56) Documents cités :
**DE-A- 3 518 411**
**FR-A- 2 277 054**
**US-A- 4 250 134**
**US-A- 4 344 796**
**US-A- 4 377 414**

(73) Titulaire : **Pichat, Philippe**
**18, rue des Tournelles**
**F-75004 Paris (FR)**

(72) Inventeur : **Pichat, Philippe**
**18, rue des Tournelles**
**F-75004 Paris (FR)**

(74) Mandataire : **Cuer, André et al**
**Cabinet Ballot-Schmit 7, rue Le Sueur**
**F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

**Description**

La présente invention a trait au domaine du traitement des résidus d'épuration des fumées produites lors de l'incinération de déchets.

On sait que, lors de la combustion des déchets de diverses origines, les incinérateurs produisent, outre du mâchefer et de fines particules de cendres volantes (appelées ci-après CV), des effluents gazeux que l'on soumet à un traitement d'épuration par la chaux. Ce traitement conduit à la formation de résidus d'épuration de fumées (appelées ci-après REF). Ces résidus contiennent essentiellement des sulfates, des chlorures, de la chaux qui n'a pas réagi lors de l'épuration et, outre les imbrûlés, des quantités assez importantes de métaux lourds tels que plomb, cuivre, zinc, cadmium, fer, aluminium... Lorsqu'ils sont mis en contact avec l'eau, ces déchets donnent un pH fortement basique du fait de leur richesse en chaux. Ils ont tendance à se solubiliser aux intempéries et à provoquer, par lixiviation, des pollutions dues notamment aux métaux toxiques.

On a, certes, proposé des procédés d'insolubilisation des REF qui consistent essentiellement en des traitements par du silicate de sodium, du ciment Portland ou des mélanges de ces produits. Les compositions obtenues par de tels traitements sont fortement basiques (pH généralement supérieur à 12) et ont donc tendance à mal fixer les éléments métalliques tels que notamment le plomb et le zinc. Par ailleurs, il peut y avoir formation intempestive d'hydrogène selon la réaction :

$$OH^- + H_2O + A1 \longrightarrow A1_2O^- + 3/2\ H_2$$

Dans le but d'obvier à ces inconvénients dus notamment à la forte basicité des REF traités, le Demandeur a effectué de nombreuses expérimentations destinées à transformer les REF en produits pratiquement insolubles dans l'eau et faciles à agglomérer en masses inertes, non toxiques car piégeant notamment les éléments métalliques, et aptes à être utilisées éventuellement dans des bétons.

Conformément à la caractéristique essentielle du procédé selon l'invention, les REF, riches en chaux, sont mélangés d'une part avec un produit contenant au moins 60 % de silice et/ou alumine et d'autre part avec un produit aqueux, la quantité du produit contenant silice et/ou alumine étant suffisante pour amener le pH du mélange à une valeur comprise entre 7 et 11,5 et la quantité de produit aqueux correspondant à une quantité d'eau comprise entre 15 et 160 % du poids total des autres constituants.

Le produit riche en silice et/ou alumine peut provenir de diverses sources. Par exemple on peut mettre en oeuvre ; de la silice fossile (qui renferme généralement au moins 80 % de $SiO_2$), de la silice ou une pouzzolane broyée, des déchets de silice provenant par exemple de la fabrication de ferrosilicium, des déchets d'amiante. La source d'alumine peut être constituée par de l'alumine pulvérulente mais on peut aussi avantageusement mettre en oeuvre des silico-aluminates tels que par exemple des argiles ou, mieux encore, des cendres volantes d'incinération (CV) qui, comme on le sait, constituent elles-mêmes des déchets pouvant être dangereux par la présence des métaux toxiques relargués par lixiviation. Grâce au procédé de l'invention, ces métaux toxiques ainsi que ceux contenus dans les REF peuvent être piégés en grande partie.

Conformément à une autre caractéristique de l'invention, l'eau ajoutée peut être constituée non seulement par l'eau ordinaire ou une eau de surface ou souterraine mais aussi par des déchets essentiellement aqueux comme par exemple des eaux résiduaires ou des boues de stations d'épuration d'eaux urbaines ou industrielles, ou encore par des lessivats de décharge. Selon le procédé de l'invention, les produits toxiques, notamment métalliques se trouvant dans ces eaux se trouvent également piégés. En pratique, l'opération d'humectage et de mélange, selon l'invention, peut être faite en malaxeur ou sur une bande transporteuse où l'eau nécessaire est en partie aspergée sur le REF et son produit d'addition.

Après traitement dans les conditions précitées, le mélange obtenu est pompé ou compacté sous forme de parpaings, par exemple, ou encore traité par l'un des engins utilisés dans les travaux publics. Selon une variante, on peut aussi extruder de tels mélanges.

Sans vouloir entrer dans des considérations théoriques très détaillées, on peut dire que le processus essentiel, dans la mise en oeuvre du procédé de l'invention, consiste à fixer la chaux libre du REF par le produit ajouté, de type silice, alumine ou silicate. Par exemple, dans le cas de la silice et en présence de l'eau additionnée il se forme un composé de type $(CaO, SiO_2, H_2O)$.

Lorsque la source de silicoaluminate est constituées par une CV, on constate la formation de silicoaluminate de type gehlinite : $(CaO)_2, Al_2O_3, SiO_2, 8H_2O$ ou encore d'aluminates de type : $(CaO)_4, Al_2O_3, 13H_2O$. En pratique, la quantité de produit riche en silice et/ou alumine ajoutée au REF est donc réglée de façon que le rapport $SiO_2$ et/ou $Al_2O_3$ sur CaO soit au moins égal à 0,8.

Les exemples suivants, indiqués à titre illustratif, montrent les résultats obtenus par la mise en oeuvre du procédé selon ses diverses variantes.

Exemple 1

On est parti d'un REF (appelé ci-après I) provenant d'une incinérateur de déchets industriels et contenant essentiellement :
26 % de $Cl_2$, 7 % de Na, 0,7 % de K, 16 % de $SO4^{2-}$, 30 % de CaO ainsi que des métaux tels que (en parties par millions ou ppm) : Pb : 26,4, Cu : 0,8 ; Cd :

1,1 ; Zn : 5,6 ; Fe : 4. la DCO (demande chimique en oxygène) était de 5990 ppm.

On disposait par ailleurs, à titre de source d'eau, d'un déchet industriel liquide (II) provenant d'une station d'épuration d'effluents résiduaires et qui, pour un pH de 7 et une DCO de 91500, contenait essentiellement comme métaux (en ppm) : Pb : 0,5 ; Cu : 90 ; Cd : 2 ; Zn : 3 ; Fe : 0,4 ; A1 : 20.

On a ajouté 50 parties (poids) du déchet (I) à 50 parties (poids) de l'effluent aqueux (II) puis on a mélangé avec 20 parties (poids) de silice fossile. Cette dernière contenait environ 83 % de $SiO_2$, 5 % d'$Al_2O_3$ et de faibles quantités d'oxydes d'A1, Fe, Ti, Ca, Mg et K.

Le mélange malaxé a durci en quelques jours. Après 8 mois, on a cassé en morceaux une partie de la masse solide et on en a disposé 50 g dans une colonne de chromatographie en faisant passer de l'eau distillée à la vitesse de 100 ml par heure. Le lessivat obtenu présentait une DCO réduite à 2900 seulement et les quantités de métaux suivantes (en ppm) : Pb : 1 ; Cu : 1,6 ; Cd : 0,2 ; Zn : 0,2 ; Fe : 1,2 ; A1 : 0,4.

## Exemple 2

On a mélangé cette fois-ci 50 parties du REF (I) avec 100 parties d'un déchet liquide (III) provenant du décapage et du nettoyage de tôles dans l'industrie automobile et qui, pour un pH de 14 et une DCO de 5096, contenait environ (en ppm) : Pb : 0,1 ; Cu : 0,8 ; Cd 0,1 ; Zn : 0,8 ; Fe : 83,2 ; Al 0,1.

On a ajouté 59 parties de silice fossile et en opérant comme dans l'exemple 1 sur un échantillon ayant seulement 14 jours de durcissement on a obtenu les résultats de lixiviation suivants, dans le test à la colonne chromatographique : pH: 9,5 ; DCO : 3000 ; Pb 0,1 ; Cu : 0,8 ; Cd 0,1 ; Zn 0,1 ; Fe 0,1.

## Exemple 3

On a mélangé 50 parties de (I) avec 100 parties d'un déchet liquide (IV) constitué ici par une boue de station d'épuration d'effluents urbains et qui, pour une DCO de 2450 contenait (en ppm) : Pb : 81 ; Cu : 274 ; Cd : 7,3 ; Zn : 780 ; Fe : 9727.

Après ajout de 25 parties (toujours en poids) de silice broyée, on a constaté le durcissement en quelques jours et obtenu les résultats suivants de lixiviation, selon le même test-colonne qu'à l'exemple 1 : DCO : 216 ; Pb 0,1 ; Cu : 0,7 ; Cd : 0,03 ; Zn : 0,016 ; Fe : 0,16.

## Exemple 4

On a opéré comme dans l'exemple 3 mais sur 100 parties (poids) de I et 100 parties de (IV) en ajoutant 25 parties de pouzzolane broyée. La lixiviation a donné les résultats suivants : DCO : 220 ; Pb : 0,2 ; Cu :

0,1 ; Cd : 0,14 ; Zn : 0,04 ; Fe : 0,03.

## Exemple 5

Le REF traité (V) provenait cette fois-ci non plus d'un incinérateur de déchets industriels mais d'un incinérateur de déchets municipaux. Ce DEF, de pH 13 était caractérisé par les lixiviations suivantes, selon la norme DIN 38414 : Pb : 28 ; Cu : 1,3 ; Cd : 1,8 ; Zn : 3,1 ; Fe : 4,2 et A1 : 3.

On a mélangé 120 parties (poids) de V avec 120 parties de silice provenant de la décomposition thermique de galets et avec 100 parties d'eau ordinaire. La solidification s'est produite en une heure environ. Le matériau final obtenu, soumis au test de lixiviation selon la norme DIN 38414 était caractérisé par les concentrations suivantes (en ppm) : Pb : 0,4 ; Cu 0,1 ; Cd 0,1 ; Zn 0,1 ; Fe : 0,1 ; A1<0,5.

## Exemple 6

Cet exemple illustre l'ajout, comme source de silicoaluminate et à titre de variante, d'une cendre volante (CV) obtenue lors de l'incinération des déchets municipaux conformes à l'exemple 5 et caractérisée par les lixiviations suivantes selon la norme DIN 38414 : Pb : 74 ; Cu : 0,8 ; Cd : 465 ; Zn : 3800 ; Fe : 1 ; A1 : 4. Le pH de la CV était de 7,3.

On a mélangé en malaxeur 120 parties du REF de l'exemple 5 avec 30 parties de CV, 100 parties d'argile (source de silice) et 85 parties d'eau ordinaire. La solidification s'est faite en une heure environ. Après lixiviation selon la norme DIN 38414, on a obtenu les concentrations suivantes en métaux (ppm) : Pb : 0,3 ; Cu 0,1 ; Cd 0,1 ; Zn : 0,1 ; Fe 0,1 et Al<4.

La résistance mécanique à la compression sur un échantillon de 28 jours était de 23 MPa (mégaPascal).

## Exemple 7

Cet exemple illustre l'utilisation d'alumine au lieu de silice comme dans les exemple précédents.

On est parti ici du REF de l'exemple 1 ci-avant (I) et d'une cendre volante (CV) d'incinération d'ordures ménagères donnant lors de la lixiviation (en ppm) ; Pb : 6 ; Cd : 4 ; Zn : 7.

Le mélange a été effectué à partir de 132 parties de (I), 34 parties de la CV susvisée, 63 parties d'alumine pulvérulente et 54 parties d'eau ordinaire.

Après lixiviation d'un échantillon durci, conformément à la norme DIN précitée, les métaux étaient descendus aux concentrations suivantes (en ppm) : Pb : 0,5 ; Cd : 0,1 et Zn : 1.

## Exemple 8

On a pris 50 parties de (I), 100 parties de (II) et on a ajouté 167 parties de cendre volante de charbon comme source de silice.

Le matériau solidifié a été soumis au test de lixiviation en colonne chromotographique, après 18 jours et l'on a obtenu les résultats suivants (en ppm) : Pb : 0,8 ; Cu 0,1 ; Zn 0,1 ; Fe : 0,4 ; A1 4 ; DCO de 1900.

## Exemple 9

On a opéré comme à l'exemple 8 mais avec 116 parties de (I), 125 parties de (II), et 42 parties, comme source de silice, d'un déchet d'amiante provenant d'une école.

La lixiviation, au test-colonne, donnait les résultats suivants : Pb : 4,1 ; Cu : 3,3 ; Cd : 0,5 ; Zn : 4,9 ; Fe : 1,5 ; A1<0,1 et DCO de 3816.

## Exemple 10

On a pris ici 30 parties (poids) d'une mélange de 4 parties du REF dénommé V de l'exemple 5 et de 1 partie de la CV de l'exemple 6. On a ajouté 100 parties d'eau et 62 parties, comme source de silice, d'un déchet d'amiante provenant d'un hôpital.

Après 9 jours, un échantillon du matériau dur obtenu a été soumis au test de lixiviation conformément à la norme DIN 38414. On a obtenu les concentrations suivantes en métaux (ppm) : Pb 0,1 ; Cu 0,1 ; Cd 0,1 ; Zn 0,1 Fe 1 ; A1 : 1 et DCO 1400.

La très faible lixiviation constatée dans les exemple 9 et cet exemple 10, montre que les fibres d'amiante ont été véritablement encapsulées par mise en oeuvre du procédé de l'invention.

On notera enfin que les mélanges obtenus selon l'invention peuvent ainsi, avant solidification, être additionnées des adjuvants habituels pour la préparation de compositions pour bétons (tels que charges, fluidifiants, agrégats...etc) lorsqu'on vise une utilisation en bâtiment ou travaux publics.

## Revendications

1. Procédé de traitement de résidus d'épuration de fumées (REF) issus de l'incinération de déchets en vue d'obtenir des compositions solides, pratiquement insolubles dans l'eau et non polluantes, caractérisé en ce que l'on mélange lesdits résidus, riches en chaux, avec d'une part un produit contenant au moins 60 % de silice et/ou alumine et d'autre part avec un produit aqueux, la quantité du produit contenant silice et/ou alumine étant suffisante pour amener le pH du mélange à une valeur comprise entre 7 et 11,5 et la quantité de produit aqueux correspondant à une quantité d'eau comprise entre 15 et 160 % du poids total des autres constituants.

2. Procédé selon la revendication 1, caractérisé en ce que la quantité dudit produit d'ajout au résidu est réglée de façon que le rapport S1O2 et/ou A1203 sur CaO soit au moins égal à 0,8.

3. Procédé selon l'une quelconque des revendications 1 ou 2, caractérisé en ce que ledit produit contenant silice et/ou alumine est choisi dans le groupe constitué par : un agent siliceux tel que silice fossile, silice broyée, pouzzolane broyée, déchets de fabrication de ferrosilicium, déchets d'amiante ; de l'alumine pulvérulente ; un silico-aluminate tel qu'une argile ou encore une cendre volante d'incinération (CV).

4. Procédé selon l'une quelconque des revendications 1 à 3, caractérisé en ce que le produit aqueux ajouté est choisi dans le groupe : eau ordinaire, eau de surface ou souterraine, eau résiduaire, boue de station d'épuration d'eau, lessivat de décharge.

5. Procédé selon la revendication 4, caractérisé en ce que une partie de l'eau est fournie par aspersion, l'autre partie étant ajoutée lors du mélange, le mélange final étant ensuite compacté ou extrudé.

6. Procédé selon l'une quelconque des revendications 1 à 5, caractérisé en ce que les mélanges obtenus sont additionnés, avant solidification, des ajouts habituels des compositions pour bétons pour des applications dans le bâtiment et les travaux publics.

## Patentansprüche

1. Behandlungsverfahren für Rauchgasreinigungsrückstände (REF), die von der Abfallverbrennung stammen, um Feststoffzusammensetzungen zu erhalten, die im Wasser praktisch unlöslich und nicht verschmutzend sind, dadurch **gekennzeichnet,** daß die kalkreichen Rückstände mit zum einen einem wenigstens 60 % Siliciumdioxid und/oder Aluminiumoxid enthaltenden Produkt und zum anderen mit einem wässrigen Produkt vermischt werden, wobei die Menge des Siliciumdioxid und/oder Aluminiumoxid enthaltenden Produkts ausreichend ist, und den pH-Wert der Mischung auf einen Wert, enthalten zwischen 7 und 11,5 zu bringen und wobei die wässrige Produktmenge einer Wassermenge enthalten zwischen 15 und 160 % des Gesamtgewichts der anderen Bestandteile, entspricht.

2. Verfahren nach Anspruch 1, dadurch **gekennzeichnet,** daß die Menge des Zugabeprodukts zum Rückstand derart geregelt wird, daß das Verhältnis S102 und/oder A1203 zu CaO wenigstens gleich 0,8 ist.

3. Verfahren nach einem beliebigen der Ansprüche 1 oder 2, dadurch **gekennzeichnet,** daß das Siliciumdioxid und/oder Aluminiumoxid enthaltende Produkt aus der Gruppe ausgewählt wird, die besteht aus: einem siliciumhaltigen Mittel wie fossilem Siliciumdioxid, zerkleinertem Siliciumdioxid, zerkleinerter Puzzolanerde, Abfällen aus der Herstellung von Ferrosilicium, Amiantabfällen; feinpulvrigem Aluminiumoxid; einem Aluminiumsilikat wie einem Ton oder außerdem einer Verbrennungsflugasche (CV).

4. Verfahren nach einem beliebigen der Ansprüche 1 bis 3, dadurch **gekennzeichnet,** daß das zugegebene wässrige Produkt aus der Gruppe ausgewählt wird: gewöhnliches Wasser, Oberflächen- oder Grundwasser, Abwasser, Schlamm einer Wasserreinigungsstation, Abfallauge.

5. Verfahren nach Anspruch 4, dadurch **gekennzeichnet,** daß ein Teil des Wassers durch Besprengung geliefert wird, wobei der andere Teil währen des Mischens zugegeben wird, wobei die Endmischung danach verdichtet oder extrudiert wird.

6. Verfahren nach einem beliebigen der Ansprüche 1 bis 5, dadurch **gekennzeichnet,** daß die erhaltenen Mischungen vor Verfestigung der üblichen Zusammensetzungen für Betone für Anwendungen im Bauwesen und bei öffentlichen Bauarbeiten zugegeben werden.

## Claims

1. A process for treating residues from purification of smoke produced by incineration of waste, for the purpose of obtaining solid compositions that are substantially insoluble in water and non-polluting, characterised in that the said residues, rich in lime, are mixed firstly with a product containing at least 60% of silica and/or alumina, and secondly with an aqueous product, the quantity of the product containing silica and/or alumina being sufficient to bring the pH of the mixture to a value lying between 7 and 11.5, while the quantity of aqueous product corresponds to a quantity of water lying between 15 and 160% of the total weight of the other constituents.

2. A process according to Claim 1, characterised in that the quantity of the said product of addition to the residue is so controlled that the ratio of $SiO_2$ and/or $Al_2O_3$ to CaO is at least equal to 0.8.

3. A process according to Claim 1 or Claim 2, characterised in that the said product containing silica and/or alumina is selected within the group comprising: a silicious agent such as fossil silica, crushed silica, crushed pozzolana, thermosilicon manufacturing residues, asbestos residues; powdered alumina; a silico-aluminate such as an argillite or, again, incineration fly ash.

4. A process according to any one of Claims 1 to 3, characterised in that the added aqueous product is selected within the group: ordinary water, surface or subterranean water, residual water, mud from a water purification plant, and discharged leaching water.

5. A process according to Claim 4, characterised in that part of the water is applied by sprinkling, the other part being added during mixing, the final mixture being then compacted or extruded.

6. A process according to any one of Claims 1 to 5, characterised in that the mixtures obtained are added, before solidification, to the usual additives of compositions for concretes for applications in building and public works.